# EUROPÄISCHE PATENTSCHRIFT

(11) **EP 3 383 598 B1**
(45) Veröffentlichungstag und Bekanntmachung des Hinweises auf die Patenterteilung: **31.08.2022**
(21) Anmeldenummer: 16804757.9
(22) Anmeldetag: 29.11.2016
(51) Int. Cl.: B25J 13/00, B25J 19/06

(54) **MANIPULATORSYSTEM UND VERFAHREN ZUR IDENTIFIKATION VON BEDIENVORRICHTUNGEN**
MANIPULATOR SYSTEM AND METHOD FOR IDENTIFYING OPERATING DEVICES
SYSTÈME MANIPULATEUR ET PROCÉDÉ D'IDENTIFICATION DE DISPOSITIFS DE COMMANDE

(30) Priorität: 04.12.2015 DE 102015224308
(43) Veröffentlichungstag der Anmeldung: 10.10.2018
(73) Patentinhaber: KUKA Deutschland GmbH, 86165 Augsburg (DE)
(72) Erfinder: KOGAN, Yevgen, 86152 Augsburg (DE)
(74) Vertreter: Mader, Joachim
(86) Internationale Anmeldenummer: PCT/EP2016/079096
(87) Internationale Veröffentlichungsnummer: WO 2017/093234

(56) Entgegenhaltungen:
- EP-A2- 1 866 712
- DE-A1-102011 083 817
- DE-A1-102014 207 406
- DE-B3-102014 201 468
- JP-A- 2001 312 604
- US-A1- 2013 123 987
- US-A1- 2013 158 708
- US-A1- 2015 134 115

## Beschreibung

### Gebiet der Erfindung

Die Erfindung betrifft ein Verfahren zur Identifikation einer Bedienvorrichtung zur Steuerung zumindest eines Manipulators eines Manipulatorsystems.

### Hintergrund

Mobile Bedienvorrichtungen und insbesondere drahtlose Bedienvorrichtungen, wie Laptop-Computer, Tablet-Computer, Smartphones und Smartwatches, spielen eine immer wichtiger werdende Rolle bei der Steuerung und/oder Bedienung von Industrieanlagen, wie beispielsweise Manipulatorsystemen.

Manipulatorsysteme umfassen typischerweise einen oder mehrere Manipulatoren bzw. Roboter, um die physikalische Interaktion mit der Umgebung zu ermöglichen. Roboter (und insbesondere Industrieroboter) sind frei programmierbare, programmgesteuerte Handhabungsgeräte. Die eigentliche Robotermechanik wird üblicherweise als Manipulator bezeichnet, welche aus einer Vielzahl von beweglichen Gliedern oder Achsen bestehen kann. Durch eine gezielte Regelung von Motoren (und insbesondere Servomotoren) können die einzelnen Achsen bewegt werden.

Derartige Manipulatorsysteme haben vielfältige Einsatzmöglichkeiten, und werden beispielsweise in der Automobilindustrie in der Fertigung und Montage eingesetzt. Zur Steuerung des Manipulators werden Bedienvorrichtungen eingesetzt, welche es erlauben den Manipulator manuell zu steuern oder Bewegungsbahnen, Ablaufprogramme und dergleichen des Manipulators zu verändern bzw. zu programmieren. Heutzutage weisen die Bedienvorrichtungen häufig eine graphische Benutzeroberfläche (Graphical User Interface, GUI) auf.

Dabei führt der Trend weg von stationären Bedienvorrichtungen hin zu mobilen, universellen Bedienvorrichtungen, die als Ergänzung zu stationären Bedienvorrichtungen oder alleinstehend eingesetzt werden können. Ein weiterer Trend ist die Verwendung bestehender Konsumgüterelektronikvorrichtungen, wie Laptop-Computer, Tablet-Computer, Smartphones oder Smartwatches und Ähnlichem als Bedienvorrichtung.

Auf diese Weise ist es möglich, universelle Bedienvorrichtungen zu entwickeln, welche sich zur Steuerung einer Vielzahl von unterschiedlichen Maschinen, Anlagen und Manipulatorsystemen nutzen lassen, ohne dass der Anwender die Bedienvorrichtung wechseln muss. Eine einheitliche, universelle Bedienvorrichtung vermindert zudem den Schulungsaufwand eines Benutzers und reduziert so das Risiko möglicher Fehlbedienungen, die von einer Vielzahl unterschiedlicher Bedienvorrichtungen ausgeht.

Mobile Bedienvorrichtungen können von beliebigen Standpunkten aus genutzt werden, da sie nicht stationär gebunden sind. Beispielsweise kann die manuelle Steuerung eines Manipulatorsystems in unmittelbarer Nähe des zu steuernden Manipulators erfolgen. Die mobile Bedienvorrichtung erlaubt es dem Benutzer sich frei zu bewegen, um z.B. eine für ihn günstige Position einzunehmen, aus der er den zu steuernden Manipulator gut einsehen kann.

Während die freie Beweglichkeit für die Bedienung große Vorteile haben kann, so entstehen hieraus auch gewisse Risiken. Beispielsweise kann es vorkommen, dass die Bedienvorrichtung mit einem anderen Manipulatorsystem bzw. einem anderen zu steuernden Manipulator gekoppelt ist, als dies vom Benutzer angenommen wird. Wenn der Benutzer beispielsweise einen ersten Manipulator eines Systems bedient und zu einem anderen Manipulator wechseln möchte, um dort weitere Arbeitsschritte durchzuführen, muss sichergestellt sein, dass die Kopplung mit dem anderen Manipulator tatsächlich erfolgt ist. Wird die mobile Bedienvorrichtung bspw. aufgrund eines Bedienfehlers nicht mit dem anderen Manipulator gekoppelt, und erkennt dies der Benutzer nicht rechtzeitig, so steuert der Benutzer unbeabsichtigt den ersten Manipulator weiter. Dies kann gefährliche Folgen haben, da der Benutzer in einem derartigen Fall nicht auf den ersten Manipulator achtet, da er eine Bewegung des vermeintlich gekoppelten anderen Manipulators erwartet.

Aus dem Stand der Technik sind mobile Bedienvorrichtungen bekannt, die eine integrierte Kamera umfassen, mit welcher ein spezifischer QR-Code, der fest an einer Industrieanlage angebracht ist, erkannt werden kann. Erkennt die mobile Bedienvorrichtung den spezifischen QR-Code, so wird auf die mobile Bedienvorrichtung eine spezifische graphische Benutzeroberfläche geladen, die zur Steuerung der so identifizierten Anlage geeignet ist. Dieses Verfahren stellt lediglich sicher, dass eine korrekte Kopplung zwischen mobiler Bedienvorrichtung und zu steuernder Anlage gegeben ist, es kann jedoch die oben genannten Probleme nicht sicher ausschließen. Insbesondere ist ein Missbrauch (z.B. um bestimmte Arbeitsschritte abzukürzen) möglich, da der spezifische Code fix ist und bspw. abfotografiert oder ausgedruckt werden kann, um auch dann eine Kopplung zu ermöglichen, wenn die Bedienvorrichtung nicht in der Nähe der Anlage ist.

US 2013/123 987 A1 betrifft ein Robotersystem umfassend eine Erfassungseinheit, die mindestens eine Stimme, ein Licht und ein Bild eines von einer Inhaltsausgabevorrichtung ausgegebenen Inhalts erfasst, wobei eine Entscheidungseinheit, die von der Erfassungseinheit erfasste Informationen auf der Grundlage von Referenzdaten bewertet, um den von der Inhaltsausgabevorrichtung ausgegebenen Inhalt zu bewerten und eine Steuereinheit, die ein Verhalten oder einen Zustand des Robotersystems auf der Grundlage der von der Entscheidungseinheit vorgenommenen Bewertung steuert.

DE 10 2014 201468 B3 betrifft eine Anordnung und ein Verfahren zur zeitlich und/oder örtlich begrenzten Steuerung von Komfortgrössen eines Raumes über ein mobiles Gerät eines Benutzers.

US 2013/158708 A1 betrifft ein System und ein Verfahren zum Bereitstellen eines sicheren Fernzugriffs auf eine Vielzahl von Robotersteuerungen, die an einem lokalen Standort für eine Person an einem entfernten Standort positioniert sind.

Aufgabe der vorliegenden Erfindung ist daher ein Verfahren bereitzustellen, welches die zuvor beschriebenen Nachteile vermindert bzw. ausräumt.

### Ausführliche Beschreibung der Erfindung

Die Aufgabe wird gelöst durch ein Verfahren nach Anspruch 1. Das nachfolgend beschriebene Manipulatorsystem ist nicht beansprucht. Die Beschreibung dient jedoch dem Verständnis der Erfindung.

Das Manipulatorsystem umfasst zumindest einen Manipulator und eine dem Manipulator zugeordnete Steuerungseinrichtung, sowie eine mobile Bedienvorrichtung zur Steuerung des zumindest einen Manipulators und/oder der Steuerungseinrichtung, wobei die mobile Bedienvorrichtung eine vorzugsweise graphische Benutzeroberfläche (GUI) aufweist. Weiter ist zumindest eine elektronische Anzeigevorrichtung vorgesehen, wie etwa ein Display, welche dazu eingerichtet ist, eine optisch lesbare Kennung (optische Kennung) anzuzeigen und zumindest eine optische Lesevorrichtung, welche dazu eingerichtet ist, die angezeigte optisch lesbare Kennung zu erfassen. Dabei kann die elektronische Anzeigevorrichtung der Steuerungseinrichtung oder der mobilen Bedienvorrichtung zugeordnet sein und die optische Lesevorrichtung der jeweils anderen von Steuerungseinrichtung oder mobilen Bedienvorrichtung. Das Manipulatorsystem ist dabei eingerichtet, die Steuerung des Manipulators und/oder der Steuerungseinrichtung dann zur Steuerung mittels der mobilen Bedienvorrichtung freizugeben, wenn die optisch lesbare Kennung von der optischen Lesevorrichtung korrekt erfasst wurde. Somit kann eine Bedienung bzw. Steuerung des Manipulators mittels der mobilen Bedienvorrichtung, und insbesondere über die graphische Benutzeroberfläche, erst dann erfolgen, wenn eine korrekte Erfassung stattgefunden hat.

Die Steuerungseinrichtung dient der Steuerung des zumindest einen Manipulators. Die Steuerungseinrichtung kann dabei sowohl Software als auch Hardware umfassen und in den Manipulator integriert sein oder eine eigenständige Anlage separat vom Manipulator sein. Die mobile Bedienvorrichtung ist vorzugsweise eine universelle mobile Bedienvorrichtung, welche zur Steuerung des zumindest einen Manipulators und/oder der Steuerungseinrichtung geeignet bzw. eingerichtet ist. Vorzugsweise sind mehrere mobile Bedienvorrichtungen mit der Steuerungseinrichtung koppelbar, wobei weiter bevorzugt jedoch immer nur eine definierte Anzahl von Bedienvorrichtungen zeitgleich mit der Steuerungseinrichtung gekoppelt ist bzw. koppelbar ist. Die mobile Bedienvorrichtung ist genau dann mit der Steuerungseinrichtung gekoppelt, wenn die Steuerung des zumindest einen Manipulators mittels der mobilen Bedienvorrichtung möglich und freigegeben ist und/oder falls mittels der mobilen Bedienvorrichtung Daten und/oder Parametersätze der Steuerungseinrichtung geändert werden sollen, die vorzugsweise Einfluss auf die Bewegung des Manipulators haben. Vorzugsweise ist jedem Manipulator immer nur genau eine mobile Bedienvorrichtung zeitgleich zugeordnet, um Fehlbedienungen zu vermeiden, die daraus resultieren können, dass zwei Benutzer gleichzeitig und ohne Absprache auf den Manipulator zugreifen. Steuert eine Steuerungseinrichtung mehrere Manipulatoren, so ist es möglich jedem dieser Manipulatoren eine eigene mobile Bedienvorrichtung zuzuordnen.

Die mobile Bedienvorrichtung weist vorzugsweise eine graphische Benutzeroberfläche (GUI) auf, die z.B. auf einem geeigneten Display, wie beispielsweise einem LCD-Display, einem TFT-Display, einem OLED-Display oder dergleichen, angezeigt wird. Die graphische Benutzeroberfläche ermöglicht es dem Benutzer beispielsweise via Touchscreen und/oder sonstigen Eingabemitteln, wie beispielsweise einer Tastatur oder einem Joystick, auf einfache Weise einen Manipulator zu steuern. Vorzugsweise ist dabei eine visuelle Rückmeldung auf der graphischen Benutzeroberfläche enthalten, die bspw. in Form eines realen Bildes, in Form eines Modells oder in Form von Zustandsparametern erfolgt, um ein intuitives Steuern zu ermöglichen.

Die elektronische Anzeigevorrichtung zur Anzeige der optisch lesbaren Kennung ist vorzugsweise ebenfalls ein Display, wie beispielsweise ein LCD-Display, ein TFT-Display, ein OLED-Display oder dergleichen. Sie kann aber aus einer oder mehreren Signalleuchten gebildet sein, wie beispielsweise LEDs, mit denen eine optisch lesbare Kennung angezeigt werden kann. Im dem Fall, dass die elektronische Anzeigevorrichtung zur Anzeige der optischen Kennung der Bedienvorrichtung zugeordnet ist, wird vorzugsweise dasselbe Display bzw. dieselbe elektronische Anzeigevorrichtung verwendet, auf der auch die graphische Benutzeroberfläche angezeigt wird.

Durch Verwendung von Drahtlos-Technologien und/oder Web-Technologien ist die Anzeige der graphischen Benutzeroberfläche (GUI) auf dem mobilen Bediengerät, welches sich in der Nähe des Manipulators befindet nicht zwingend sichergestellt. Beispielsweise kann die GUI auf einem entfernten mobilen Bediengerät angezeigt werden. Durch die Anzeige der optisch lesbaren Kennung unmittelbar in der GUI wird sichergestellt, dass die GUI auf dem mobilen Bediengerät angezeigt wird, welches sich in der Nähe des Manipulators befindet. Die in bspw. der GUI des Bediengeräts dargestellte/angezeigte optische Kennung kann dann von der optischen Lesevorrichtung des Manipulatorsystems gelesen werden. Damit ist sichergestellt, dass das Bediengerät mit der GUI tatsächlich in unmittelbarer Nähe des Manipulatorsystems ist.

Vorzugsweise kann die GUI auch selbst als optische Kennung verwendet werden. Ist das optische Aussehen der GUI bekannt und charakteristisch, kann die GUI oder ein Teil der GUI mittels der optischen Lesevorrichtung des Manipulatorsystems erfasst und anschließend ausgewertet werden. Auch dies stellt sicher, dass das Bediengerät mit der GUI tatsächlich in unmittelbarer Nähe des Manipulatorsystems ist.

Eine optisch lesbare Kennung kann beispielsweise ein maschinenlesbarer ein- oder zweidimensionaler Code, insbesondere ein QR-Code sein, ein Barcode oder eine zeitlich veränderliche Abfolge von optischen Signalen, wie sie beispielsweise aus der TAN-Generierung beim Online-Banking bekannt ist. Optisch lesbare Kennungen können zudem eine Zahlenfolge, eine Kombination von an- und ausgeschalteten Signalleuchten oder dergleichen umfassen. Ebenso ist es vorstellbar, dass ein bestimmtes Bild oder eine bestimmte Anzeige oder ein Teil davon, welche auf der elektronischen Anzeigevorrichtung angezeigt wird, von der optischen Lesevorrichtung erkannt wird.

Die optische Lesevorrichtung kann beispielsweise eine Kamera sein, ein Scanner oder ein Laserscanner oder dergleichen und ist vorzugsweise in der mobilen Bedienvorrichtung integriert oder in der Nähe des zu steuernden Manipulators angebracht, falls die optische Lesevorrichtung der Steuerungseinrichtung zugeordnet ist. Da die Steuerung des Manipulators erst dann freigegeben wird, wenn die optisch lesbare Kennung von der optischen Lesevorrichtung korrekt erfasst wurde, kann sichergestellt werden, dass sich die mobile Bedienvorrichtung zu diesem Zeitpunkt in der Nähe der optischen Lesevorrichtung der Steuerungseinrichtung bzw. in der Nähe der elektronischen Anzeigevorrichtung der Steuerungseinrichtung befindet. Insbesondere kann sichergestellt werden, dass die graphische Benutzeroberfläche auf dem mobilen Bediengerät, welches sich in der Nähe des Manipulators befindet richtig angezeigt wird. Um sicherzustellen, dass sich die mobile Bedienvorrichtung auch in der Nähe des zu steuernden Manipulators befindet, ist die optische Lesevorrichtung bzw. die elektronische Anzeigevorrichtung, welche der Steuerungseinrichtung zugeordnet ist, am oder in unmittelbarer Nähe des zu steuernden Manipulators angeordnet.

Vorzugsweise umfasst die mobile Bedienvorrichtung eine erste Drahtlos-Kommunikationsvorrichtung und die Steuerungseinrichtung eine zweite Drahtlos-Kommunikationsvorrichtung, die dazu eingerichtet sind, Daten der optisch lesbaren Kennung zu übertragen. Beispielsweise verbindet sich die Bedienvorrichtung drahtlos mit der Steuerungseinrichtung und die Steuerungseinrichtung versendet automatisch oder auf Befehl des Benutzers Daten der optischen Kennung an die Bedienvorrichtung. Diese zeigt dann an ihrer elektronischen Anzeigevorrichtung die den übertragenden Daten entsprechende optisch lesbare Kennung an. Auf diese Weise können vorteilhaft dynamische Kennungen verwendet werden, die für jeden Kopplungsvorgang geändert werden. Ein Missbrauch durch das Speichern der optischen Kennung kann damit unterbunden werden, da die übertragene Kennung nur einmal verwendet werden kann. Dieses Verfahren funktioniert analog auch umgekehrt, d.h. die Daten der optischen Kennung können auch von der Bedienvorrichtung an die Steuerungsvorrichtung übertragen werden und die Steuerungsvorrichtung zeigt dann die entsprechende Kennung an. Die auf der Bedienvorrichtung angezeigte optisch lesbare Kennung kann dann z.B. von der Lesevorrichtung, die in diesem Fall dem Manipulatorsystem zugeordnet ist, gelesen bzw. erkannt werden. Nur wenn die Kennung korrekt gelesen bzw. erkannt wurde, wird die Steuerung des Manipulators freigegeben.

Die ersten und zweiten Drahtlos-Kommunikationsvorrichtungen können beispielsweise WLAN-Vorrichtungen, Bluetooth-Vorrichtungen, Zigbee-Vorrichtungen oder andere Drahtlos-Kommunikationsvorrichtungen sein. Die Daten der optisch lesbaren Kennung können sowohl Bilddaten der optisch lesbaren Kennung umfassen, wie beispielsweise die einzelnen Pixel eines QR-Codes, und/oder Daten umfassen, aus welchen die optisch lesbare Kennung generiert werden kann. Werden beispielsweise zunächst die Daten der optisch lesbaren Kennung von der Steuerungseinrichtung an die mobile Bedienvorrichtung übertragen und wird anschließend die optisch lesbare Kennung auf der elektronischen Anzeigevorrichtung der mobilen Bedienvorrichtung angezeigt, so kann eine optische Lesevorrichtung der Steuerungseinrichtung die optisch lesbare Kennung erfassen. Die erfassten Daten können anschließend mit den zuvor übertragenen Daten verglichen werden. Stimmen die Daten überein, so wurde die optisch lesbare Kennung korrekt erfasst und es kann davon ausgegangen werden, dass sich die mobile Bedienvorrichtung in der Nähe der Steuerungseinrichtung, respektive des zu steuernden Manipulators befindet.

Vorzugsweise ist die optische Lesevorrichtung der Steuerungseinrichtung zugeordnet und die elektronische Anzeigevorrichtung der mobilen Bedienvorrichtung, wobei die elektronische Anzeigevorrichtung vorzugsweise in einem Gehäuse der mobilen Bedienvorrichtung integriert ist. Ist die elektronische Anzeigevorrichtung der mobilen Bedienvorrichtung zugeordnet, so kann die graphische Benutzeroberfläche (GUI) direkt auf derselben elektronischen Anzeigevorrichtung der mobilen Bedienvorrichtung angezeigt werden.

Alternativ ist die optische Lesevorrichtung der mobilen Bedienvorrichtung zugeordnet und die elektronische Anzeigevorrichtung der Steuerungseinrichtung, wobei die optische Lesevorrichtung vorzugsweise in einem Gehäuse der mobilen Bedienvorrichtung integriert ist. In diesem Fall ist eine weitere elektronische Anzeigevorrichtung, die der Steuerungseinrichtung zugeordnet ist, neben der elektronischen Anzeigevorrichtung der mobilen Bedienvorrichtung notwendig. Typischerweise ist die optische Lesevorrichtung in dem Gehäuse der mobilen Bedienvorrichtung integriert und kann beispielsweise eine ohnehin vorhandene Kamera eines Smartphones, eines Tablet-Computers oder eines Laptop-Computers sein, so dass keine zusätzlichen Lesevorrichtungen notwendig sind. Hier ist es vorteilhaft, die mobile Bedienvorrichtung und die optische Lesevorrichtung in einem Gehäuse zu integrieren, um sicherstellen zu können, dass sich die mobile Bedienvorrichtung tatsächlich in der Nähe der elektronischen Anzeigevorrichtung (welche in diesem Fall der Steuerungseinrichtung zugeordnet ist) befindet. Ist die elektronische Anzeigevorrichtung an oder in der Nähe der Steuerungseinrichtung, respektive des zu steuernden Manipulators angeordnet, kann sichergestellt werden, dass sich die mobile Bedienvorrichtung in der Nähe der Steuerungseinrichtung respektive des zu steuernden Manipulators befindet.

Vorzugweise ist die optische Lesevorrichtung unabhängig von ihrer Zuordnung eine Kamera, ein optischer Scanner und/oder ein Laserscanner. Eine Kamera ist vorteilhaft, da Kameras in handgehaltenen Geräten, wie Laptop-Computern, Tablet-Computern, Smartphones und ähnlichem in der Regel bereits integriert sind. Somit sind keine weiteren (ergänzenden) Hardwarevorrichtungen notwendig. Ein optischer Scanner und/oder ein Laserscanner sind hingegen vorteilhaft, da diese Vorrichtungen speziell auf die Erfassung optisch lesbarer Kennungen ausgerichtet sind und in diesem Bereich auch beispielsweise unter schwierigen Lichtverhältnissen sehr leistungsstark sind. Somit ist eine einfache und störungsfreie Erkennung der optischen Kennung möglich. Zudem sind derartige Systeme kostengünstig. Insbesondere wenn die optische Lesevorrichtung der Steuerungseinrichtung zugeordnet ist, ist es oft vorteilhaft, einen optischen Scanner und/oder einen Laserscanner zu verwenden.

Vorzugsweise umfasst die optisch lesbare Kennung Daten bzw. basiert auf Daten, welche Statusparameter des Manipulatorsystems und/oder Kontrollgrößen umfassen. Beispielsweise kann ein Statusparameter Informationen betreffend das aktuell geladene Bedienprogramm des Manipulators oder andere Informationen, wie beispielsweise die aktuelle Pose des Manipulators, umfassen. Ebenso können aktuelle Statusparameter der mobilen Bedienvorrichtung in den Daten enthalten sein. Beispielhafte Kontrollgrößen sind zufällig generierte Daten wie Kontrollsummen, die Fehlerkorrekturmechanismen ermöglichen, oder Größen wie beispielsweise eine eindeutige Kennung des Manipulatorsystem und/oder des Manipulators oder eine eindeutige Kennung der mobilen Bedienvorrichtung, so dass ein Eingriff in die Steuerung des Manipulators eindeutig einer bestimmten mobilen Bedienvorrichtung zugeordnet werden kann. Somit kann die Steuerung des Manipulators mittels der mobilen Bedienvorrichtung protokolliert und einer bestimmten mobilen Bedienvorrichtung oder einem bestimmten Benutzer zugeordnet werden.

Vorzugsweise ist die optisch lesbare Kennung zeitlich veränderlich und/oder ein- oder zweidimensionaler Code, wobei die optisch lesbare Kennung bevorzugt ein QR-Code ist.. Zeitlich veränderliche optisch lesbare Kennungen haben den Vorteil, dass sie bei der Identifikation der mobilen Bedienvorrichtung schwerer zu umgehen sind. Wird beispielsweise immer die gleiche Kennung übermittelt, so kann theoretisch beispielsweise ein Ausdruck dieser Kennung erzeugt und der optischen Lesevorrichtung vorgehalten werden. Ein derartiger Missbrauch (um z.B. vorgeschriebene aber unbequeme Sicherheitsprozeduren zu vermeiden) ist allerdings technisch schwieriger zu realisieren als das Abfotografieren einer Kennung, die bspw. in Form einer Plakette am zu steuernden Manipulator angebracht ist. Vorzugsweise kann die optisch lesbare Kennung beispielsweise verändert werden, während sie auf der elektronischen Anzeigevorrichtung angezeigt wird. Eine derartige zeitliche Veränderung ist beispielsweise aus der TAN-Generierung beim Online-Banking bekannt. Weiter bevorzugt wird die optische lesbare Kennung in Form eines QR-Codes bereitgestellt. QR-Codes bieten derzeit die Möglichkeit 2956 Bit zu speichern. Folglich bieten QR-Codes die Möglichkeit eine Vielzahl von Daten von der elektronischen Anzeigevorrichtung an die optische Lesevorrichtung zu übertragen.

Vorzugsweise ist die mobile Bedienvorrichtung eine handgehaltene mobile Bedienvorrichtung, und zwar insbesondere ein drahtloses Handgerät, wie ein Laptop-Computer, ein Tablet-Computer, ein Smartphone und/oder eine Smartwatch. Derartige Handgeräte sind vorteilhaft, da sie universell sind und an spezifische Manipulatorsysteme, beispielsweise mittels Apps, angepasst werden können. Somit ist die Steuerung mehrerer Manipulatoren und sogar mehrerer Manipulatorsysteme mit nur einer mobilen Bedienvorrichtung möglich. Weiterhin sind insbesondere Laptop-Computer, Tablet-Computer, Smartphones und/oder Smartwatches aufgrund ihrer hohen Verfügbarkeit im Bereich der Consumer Electronics kostengünstig zu beziehen.

Vorzugsweise umfasst das Manipulatorsystem mehrere Manipulatoren wobei der Steuerungseinrichtung mehrere Manipulatoren zugeordnet sind, und wobei jedem Manipulator jeweils eine optische Lesevorrichtung oder eine elektronische Anzeigevorrichtung zugeordnet ist. Dies ermöglicht die Erreichung der oben beschriebenen Vorteile und insbesondere die räumliche Zuordnung von graphischer Benutzeroberfläche (GUI) und/oder mobilem Bediengerät zu einem Manipulator, wobei der Manipulator in einem Manipulatorsystem mit mehreren Manipulatoren eingesetzt wird.

Die Aufgabe wird gelöst durch ein Verfahren zur Identifikation einer mobilen Bedienvorrichtung zur Steuerung zumindest eines Manipulators eines Manipulatorsystems, wobei das Manipulatorsystem eine dem Manipulator zugeordnete Steuerungseinrichtung aufweist und wobei die mobile Bedienvorrichtung vorzugsweise eine graphische Benutzeroberfläche (GUI) aufweist. Das Verfahren weist dabei die folgenden Verfahrensschritte auf:
a) Anzeigen zumindest einer optisch lesbaren Kennung auf einer elektronischen Anzeigevorrichtung, wobei die elektronische Anzeigevorrichtung der Steuerungseinrichtung oder der mobilen Bedienvorrichtung zugeordnet ist;
b) Erfassen der optisch lesbaren Kennung mittels einer optischen Lesevorrichtung, wobei die optische Lesevorrichtung der jeweils anderen von Steuerungseinrichtung oder mobilen Bedienvorrichtung zugeordnet ist (ist also die elektronische Anzeigevorrichtung der Bedienvorrichtung zugeordnet, so ist die Lesevorrichtung denklogisch der Steuerungseinrichtung zugeordnet und umgekehrt);
c) Freigeben der Steuerung des Manipulators zur Steuerung mittels der mobilen Bedienvorrichtung dann, wenn die optisch lesbare Kennung von der optischen Lesevorrichtung korrekt erfasst wurde.

Die Verfahrensschritte des Anzeigens (a) des Erfassens (b) und des Freigebens (c) ermöglichen eine Kontrolle, ob die mobile Bedienvorrichtung zum Zeitpunkt der Freigabe in der Nähe des zu steuernden Manipulators ist. Die Freigabe der Steuerung kann erfolgen, indem z.B. die graphische Benutzeroberfläche erst dann angezeigt wird, wenn die optisch lesbare Kennung von der optischen Lesevorrichtung korrekt erfasst wurde. Die Freigabe selbst kann durch die mobile Bedienvorrichtung, die Steuerungseinrichtung oder global im Manipulatorsystem erfolgen. Die nach der Freigabe ermöglichte Steuerung des Manipulators erfolgt vorzugsweise mittels der graphischen Benutzeroberfläche der mobilen Bedienvorrichtung.

Das Verfahren umfasst weiterhin vor Schritt a) die Verfahrensschritte des Übertragens von Daten der optisch lesbaren Kennung von der Steuerungseinrichtung zu der mobilen Bedienvorrichtung und Anzeige der Kennung auf der elektronischen Anzeigevorrichtung der mobilen Bedienvorrichtung oder umgekehrt, d.h. Übertragen von Daten der optisch lesbaren Kennung von der mobilen Bedienvorrichtung zu der Steuerungseinrichtung und Anzeige der Kennung auf der elektronischen Anzeigevorrichtung der Steuerungseinrichtung.

Das Übertragen der Daten der optisch lesbaren Kennung erfolgt vorzugsweise drahtlos, nachdem sich Bedienvorrichtung und Steuerungseinrichtung über ein entsprechendes Kommunikationsprotokoll miteinander verbunden haben. Nach Übertragung kann die Kennung angezeigt und gelesen werden, und die Steuerung wird erst nach korrekter Erfassung freigegeben. Dieses Verfahren ermöglicht einen besonders sicheren Betrieb, da die Kennung in einfacher Weise dynamisch generiert werden kann, d.h. für jeden Kopplungsvorgang eine eigene Kennung erzeugt werden kann.

Vorzugsweise ist (i) die optische Lesevorrichtung der Steuerungseinrichtung zugeordnet und die elektronische Anzeigevorrichtung der mobilen Bedienvorrichtung, wobei die elektronische Anzeigevorrichtung vorzugsweise in einem Gehäuse der mobilen Bedienvorrichtung integriert ist. Alternativ ist (ii) die optische Lesevorrichtung der mobilen Bedienvorrichtung zugeordnet und die elektronische Anzeigevorrichtung der Steuerungseinrichtung, wobei in diesem Fall die optische Lesevorrichtung vorzugsweise in einem Gehäuse der mobilen Bedienvorrichtung integriert ist.

Alternative (i) ermöglicht es sicherzustellen, dass sich die elektronische Anzeigevorrichtung, die der mobilen Bedienvorrichtung zugeordnet ist, in unmittelbaren Nähe der optischen Lesevorrichtung und somit, falls die optische Lesevorrichtung in unmittelbarer Nähe des zu steuernden Manipulators angeordnet ist, in unmittelbarer Nähe des zu steuernden Manipulators befindet. Bei Alternative (ii) ist die optische Lesevorrichtung vorzugsweise in einem Gehäuse der mobilen Bedienvorrichtung integriert, sodass nach dem Erfassen der optisch lesbaren Kennung sichergestellt werden kann, dass sich die gesamte mobile Bedienvorrichtung in der Nähe der elektronischen Anzeigevorrichtung, welche der Steuerungseinrichtung zugeordnet ist, befindet.

Vorzugsweise werden die Daten der zumindest einen optisch lesbaren Kennung und/oder die optisch lesbare Kennung mittels der Steuerungseinrichtung oder mobilen Bedienvorrichtung dynamisch generiert. Die dynamische Generierung hat eine zeitlich veränderliche optisch lesbare Kennung und/oder Daten der optisch lesbaren Kennung zur Folge und erschwert eine Umgehung des Systems. Da die optisch lesbare Kennung zeitlich variabel ist, kann das System nicht umgangen werden, indem beispielsweise ein (nicht autorisierter) Papierausdruck der optisch lesbaren Kennung verwendet wird.

Vorzugsweise werden in Verfahrensschritt a) mehrere optisch lesbare Kennungen in zeitlicher Abfolge angezeigt, wobei das Freigeben der Steuerung des Manipulators nur dann erfolgt, wenn die mehreren optisch lesbaren Kennungen von der optischen Lesevorrichtung korrekt erfasst wurden. Die Verwendung mehrerer optisch lesbarer Kennungen erschwert die Umgehung des Systems noch weiter, da z.B. die Umgehung mittels eines (nicht autorisierten) Papierausdrucks unmöglich wird. Insbesondere ermöglicht die Verwendung mehrerer optisch lesbarer Kennungen in zeitlicher Abfolge die Übertragung von größeren Datenmengen. Werden beispielsweise QR-Codes als optisch lesbare Kennungen verwendet, so kann mit jedem angezeigten QR-Code eine Datenmenge von 2956 Bit übertragen werden. Dies ermöglicht die optische Übertragung einer Vielzahl von Daten, wie z.B. Statusparametern des Manipulatorsystems und/oder Kontrollgrößen.

Vorzugsweise wird die optisch lesbare Kennung aus den übertragenen Daten der optisch lesbaren Kennung generiert. Somit ist die Übertragung einzelner Pixel oder einer Bilddatei der optisch lesbaren Kennung nicht notwendig, wodurch beispielsweise die zu übertragende Datenmenge gering gehalten werden kann.

Vorzugsweise werden zumindest die Verfahrensschritte a) bis c) in definierten Zeitintervallen wiederholt, wobei die definierten Zeitintervalle bevorzugt kleiner 15 Minuten noch bevorzugter kleiner 10 Minuten und sogar noch bevorzugter kleiner 5 Minuten sind. Eine Wiederholung der Verfahrensschritte a) bis c) stellt sicher, dass die mobile Bedienvorrichtung auch nach der Kopplung mit der Steuerungseinrichtung in der Nähe der Steuerungseinrichtung bzw. des zusteuernden Manipulators verbleibt bzw. verbleiben muss. Dabei ist es vorteilhaft, dass Zeitintervall ausreichend lang zu wählen, damit die Steuerung des Manipulators durch den Benutzer nicht behindert wird, oder dass das Zeitintervall erst ab dem Zeitpunkt beginnt, wenn die letzte Steuerungs-Eingabe durch den Benutzer erfolgte.

### Beschreibung der Figuren

Im Folgenden wird die Erfindung unter Bezugnahme auf die Figuren näher beschrieben. Dabei zeigt:
- Fig. 1A: eine schematische Darstellung eines Manipulatorsystems zur Identifikation von mobilen Bedienvorrichtungen vor bzw. während der Identifikation;
- Fig. 1B: eine schematische Darstellung des Manipulatorsystems zur Identifikation von mobilen Bedienvorrichtungen gemäß Fig. 1A nach erfolgreicher Identifikation;
- Fig. 2: eine schematische Darstellung eines weiteren Manipulatorsystems zur Identifikation von mobilen Bedienvorrichtungen, und
- Fig. 3: ein schematisches Ablaufdiagramm eines Verfahrens zur Identifikation von mobilen Bedienvorrichtungen.

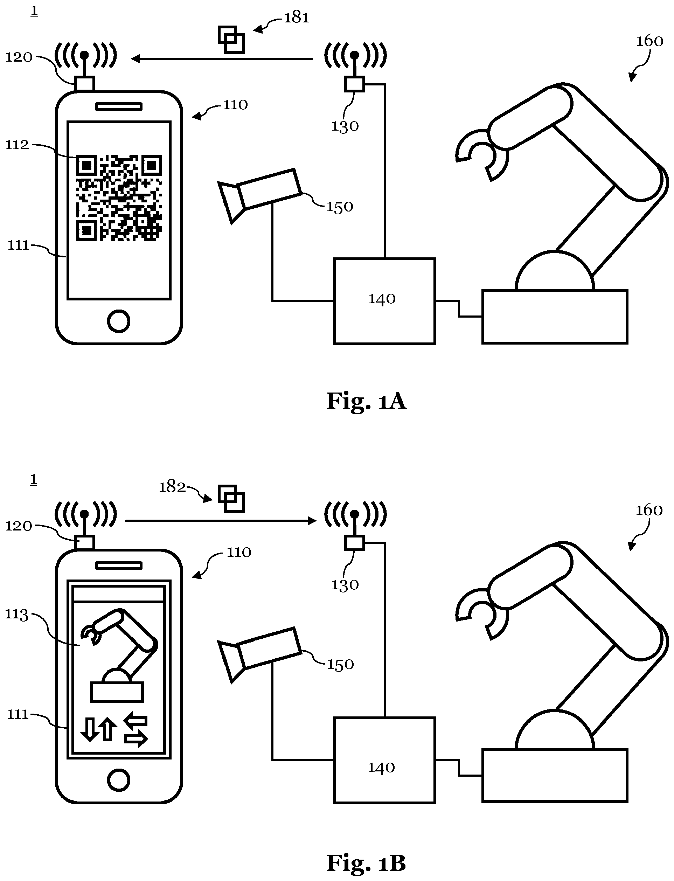

Insbesondere zeigt Fig. 1A eine schematische Darstellung eines Manipulatorsystems 1 zur Identifikation von mobilen Bedienvorrichtungen 110 bevor oder während die graphische Benutzeroberfläche 113 (in Fig. 1B gezeigt) der mobilen Bedienvorrichtung 110 freigegeben wird. Die Bedienvorrichtung 110 ist vorzugsweise ein Smartphone oder ein Tablet-Computer. Die mobile Bedienvorrichtung 110 umfasst zumindest eine elektronische Anzeigevorrichtung 111, nämlich ein Display, und eine erste Drahtlos-Kommunikationsvorrichtung 120.

Dem Manipulator 160 des Manipulatorsystems 1 ist eine Steuerungseinrichtung 140 zugeordnet, welche den Manipulator steuert. Weiterhin sind der Steuerungseinrichtung 140 eine zweite Drahtlos-Kommunikationsvorrichtung 130 sowie eine optische Lesevorrichtung 150 zugeordnet. Die Steuerungseinrichtung 140 kann sowohl Software als auch Hardware umfassen und kann im Manipulator 160 integriert sein oder in einem separaten Gehäuse eingerichtet sein. Zudem kann die Steuerungseinrichtung 140 dazu eingerichtet sein mehrere Manipulatoren 160 zu steuern. Vorzugsweise ist, wenn der Steuerungseinrichtung 140 mehrere Manipulatoren 160 zugeordnet sind jedem Manipulator 160 jeweils eine optische Lesevorrichtung 150 oder elektronische Anzeigevorrichtung 270 zugeordnet.

Vorzugsweise ist die optische Lesevorrichtung 150 in unmittelbarer Nähe des Manipulators 160 angeordnet. Zur Identifikation der mobilen Bedienvorrichtung 110 werden mittels der zweiten Drahtlos-Kommunikationsvorrichtung 130 Daten 181 einer optisch lesbaren Kennung 112 an die erste Drahtlos-Kommunikationsvorrichtung 120 übermittelt. Entsprechend den übermittelten Daten 181 wird auf der elektronischen Anzeigevorrichtung 111 der Bedienvorrichtung 110 die optisch lesbare Kennung 112 angezeigt.

Die optisch lesbare Kennung 112 ist wie in Figur 1A gezeigt beispielsweise ein QR-Code, der von der optischen Lesevorrichtung 150 erfasst werden kann. Wird die optisch lesbare Kennung 112 von der optischen Lesevorrichtung 150 korrekt erfasst (d. h. die Kennung wird ohne Fehler erfasst und sie entspricht der erwarteten Kennung gemäß der Daten 181), so wird die Steuerung des Manipulators 160 freigegeben, so dass der Manipulator mittels der graphischen Benutzeroberfläche 113 der mobilen Bedienvorrichtung 110 bedient werden kann.

Eine freigegebene Steuerung ist beispielsweise in Figur 1B gezeigt. Gleiche Bezugszeichen in Figur 1A und Figur 1B bezeichnen jeweils gleiche Komponenten des gezeigten Manipulatorsystems 1. Zur Steuerung des Manipulators 160 mittels der graphischen Benutzeroberfläche 113 der mobilen Bedienvorrichtung 110 kann ein Benutzer Eingaben auf der mobilen Bedienvorrichtung 110 vornehmen. Vorzugsweise ist dazu die elektronische Anzeigevorrichtung 111, welche auch die graphische Benutzeroberfläche 113 anzeigt, ein berührungssensitiver Bildschirm, wie beispielsweise ein kapazitiver Touchscreen. Die Eingaben (Bedienbefehle), welche die Steuerung des Manipulators 160 betreffen, werden über die erste Drahtlos-Kommunikationsvorrichtung 120 mittels der Daten 182 an die zweite Drahtlos-Kommunikationsvorrichtung 130 gesendet und über die Steuerungseinrichtung 140 dem Manipulator 160 bereitgestellt.

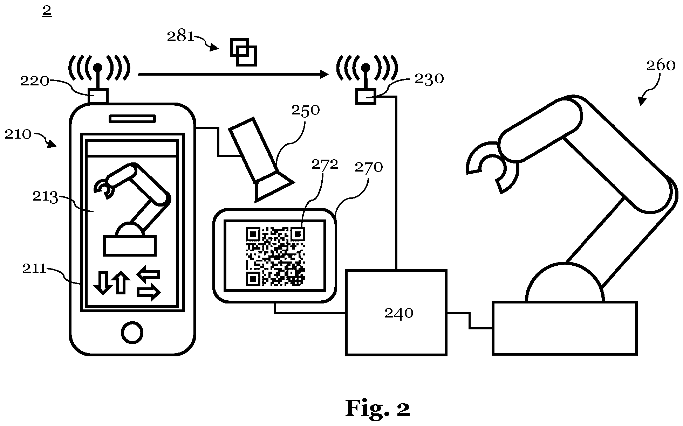

Figur 2 zeigt eine schematische Darstellung eines Manipulator-Systems 2 zur Identifikation einer mobilen Bedienvorrichtung 210. Die mobile Bedienvorrichtung 210 umfasst eine graphische Benutzeroberfläche (GUI) 213, welche auf einer der GUI zugeordneten elektronischen Anzeigevorrichtung 211 angezeigt wird. Die graphische Benutzeroberfläche 213 muss, bevor die mobile Bedienvorrichtung 210 den Manipulator 260 steuern kann, zunächst freigegeben werden.

Weiterhin umfasst die mobile Bedienvorrichtung 210 eine erste Drahtlos-Kommunikationsvorrichtung 220, welche Daten 281 an eine zweite Drahtlos-Kommunikationsvorrichtung 230 senden kann. Die zweite Drahtlos-Kommunikationsvorrichtung 230 ist einer Steuerungseinrichtung 240 des Manipulators 260 zugeordnet. Der Steuerungseinrichtung 240 ist weiterhin eine elektronische Anzeigevorrichtung 270 zugeordnet. Die elektronische Anzeigevorrichtung 270 ist dazu eingerichtet eine optisch lesbare Kennung 272, welche den übertragenen Daten 281 entspricht, anzuzeigen.

Die mobile Bedienvorrichtung 210 umfasst weiterhin eine optische Lesevorrichtung 250, welche vorzugsweise in dem Gehäuse der mobilen Bedienvorrichtung integriert ist. Die optische Lesevorrichtung 250 ist dazu eingerichtet, die auf der elektronischen Anzeigevorrichtung 270 angezeigte optisch lesbare Kennung 272 zu erfassen. Wird die optisch lesbare Kennung 272 von der optischen Lesevorrichtung 250 erfasst und stimmen die erfassten Daten mit den übertragenen Daten 281 überein, so kann davon ausgegangen werden, dass sich die mobile Bedienvorrichtung 210 in der Nähe der elektronischen Anzeigevorrichtung befindet. Nach dem korrekten Erfassen der optisch lesbaren Kennung 272 kann die graphische Benutzeroberfläche 213 freigegeben werden. Die Freigabe kann erfolgen, indem auf der elektronischen Anzeigevorrichtung 211 der mobilen Bedienvorrichtung 210 die graphische Benutzeroberfläche 213 angezeigt wird, oder die Bedienung derselben erst dann ermöglicht wird.

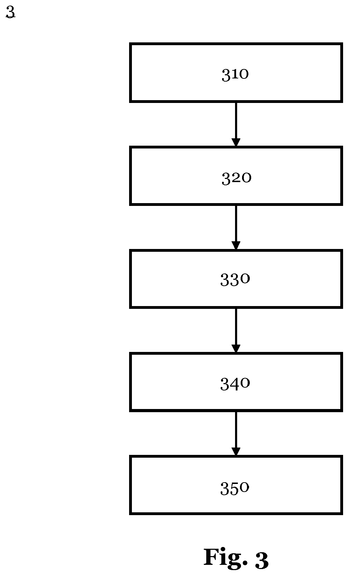

Figur 3 zeigt ein schematisches Ablaufdiagramm eines Verfahrens 3 zur Identifikation von mobilen Bedienvorrichtungen. Das Verfahren wird unter Bezugnahme auf das Beispiel der Fig. 1A beschrieben, es funktioniert jedoch analog auch mit dem Beispiel der Figur 2. In einem ersten Verfahrensschritt 310 wird eine Anfrage von einer mobilen Bedienvorrichtung 110 oder einer Steuerungseinrichtung 140 gesendet, die feststellt, ob eine mobile Bedienvorrichtung 110 in der Nähe der Steuerungseinrichtung 140 vorhanden ist.

Ist eine mobile Bedienvorrichtung 110 in der Nähe der Steuerungseinrichtung 140 vorhanden, so erfolgt in einem zweiten Verfahrensschritt 320 eine Übertragung von Daten 181 zumindest einer optisch lesbaren Kennung 112 von der Steuerungseinrichtung 140 an die mobile Bedienvorrichtung 110.

Nach erfolgreicher Übertragung der Daten 181 wird in einem dritten Verfahrensschritt 330 aus den Daten eine optisch lesbare Kennung 112 erzeugt und auf der elektronischen Anzeigevorrichtung 211 angezeigt. Nach dem Anzeigen der Kennung 112 in Verfahrensschritt 330 wird in einem vierten Verfahrensschritt 340 die optisch lesbare Kennung mittels der optischen Lesevorrichtung 150 erfasst. In einem fünften Verfahrensschritt 350 wird die Kennung überprüft und die Steuerung des Manipulators 160 mittels einer graphischen Benutzeroberfläche 113 der mobilen Bedienvorrichtung 110 gegebenenfalls freigegeben.

### Bezugszeichenliste:

- 1, 2: System
- 3: Verfahren
- 110, 210: Bedienvorrichtungen
- 111, 211: Anzeigevorrichtung der Bedienvorrichtung
- 112, 272: optisch lesbare Kennung
- 113, 213: graphische Benutzeroberfläche GUI
- 120, 220: erste Drahtlos-Kommunikationsvorrichtung
- 130, 230: zweite Drahtlos-Kommunikationsvorrichtung
- 140, 240: Steuerungseinrichtung (Software und/oder Hardware)
- 150, 250: optische Lesevorrichtung
- 160, 260: Manipulator
- 181, 281: Daten der optisch lesbaren Kennung
- 182: Daten zur Bedienung
- 270: Anzeigevorrichtung der Steuerungseinrichtung
- 310: Verbindungsaufbau
- 320: Senden der optisch lesbaren Kennung
- 330: Anzeigen der optisch lesbaren Kennung
- 340: Erfassen der optisch lesbaren Kennung
- 350: Freigegeben der graphischen Benutzeroberfläche

## Patentansprüche

1. Verfahren (3) zur Identifikation einer mobilen Bedienvorrichtung (110; 210), insbesondere eines drahtlosen Handgeräts, zur Steuerung zumindest eines Manipulators (160; 260) eines Manipulatorsystems (1; 2), wobei das Manipulatorsystem (1; 2) eine dem Manipulator (160; 260) zugeordnete Steuerungseinrichtung (140; 240) aufweist und wobei die mobile Bedienvorrichtung (110; 210) vorzugsweise eine graphische Benutzeroberfläche (GUI) (113; 213) aufweist, umfassend die folgenden Verfahrensschritte:
a) Anzeigen (330) zumindest einer optisch lesbaren Kennung (112; 272) auf einer elektronischen Anzeigevorrichtung (111; 270), wobei die elektronische Anzeigevorrichtung (111; 270) der Steuerungseinrichtung (140; 240) oder der mobilen Bedienvorrichtung (110; 210) zugeordnet ist;
b) Erfassen (340) der optisch lesbaren Kennung (112; 272) mittels einer optischen Lesevorrichtung (150; 250), wobei die optische Lesevorrichtung (150; 250) der jeweils anderen Steuerungseinrichtung (140; 240) oder mobilen Bedienvorrichtung (110; 210) zugeordnet ist;
c) Freigeben (350) der Steuerung des Manipulators (160; 260) zur Steuerung mittels der mobilen Bedienvorrichtung (110; 210) dann, wenn die optisch lesbare Kennung (112; 272) von der optischen Lesevorrichtung (150; 250) korrekt erfasst wurde, **dadurch gekennzeichnet, dass** das Verfahren weiterhin die folgenden Verfahrensschritte umfasst:
Übertragen (320) von Daten (181, 182) zumindest einer optisch lesbaren Kennung (112; 272) von der Steuerungseinrichtung (140) zu der mobilen Bedienvorrichtung (210) und Anzeige der optisch lesbaren Kennung (112; 272) auf der elektronischen Anzeigevorrichtung der mobilen Bedienvorrichtung (210); oder:
Übertragen (320) von Daten (181, 182) zumindest einer optisch lesbaren Kennung (112; 272) von der mobilen Bedienvorrichtung (210) zu der Steuerungseinrichtung (140) und Anzeige der optisch lesbaren Kennung (112; 272) auf der elektronischen Anzeigevorrichtung der Steuerungseinrichtung (140).

2. Verfahren (3) nach Anspruch 1, wobei
i) die optische Lesevorrichtung (150) der Steuerungseinrichtung (140) zugeordnet ist, und wobei die elektronische Anzeigevorrichtung (111) der mobilen Bedienvorrichtung (110) zugeordnet ist, wobei die elektronische Anzeigevorrichtung (111) vorzugsweise in einem Gehäuse der mobilen Bedienvorrichtung (110) integriert ist, oder wobei
ii) die optische Lesevorrichtung (250) der mobilen Bedienvorrichtung (210) zugeordnet ist, und wobei die elektronische Anzeigevorrichtung (270) der Steuerungseinrichtung (240) zugeordnet ist, wobei die optische Lesevorrichtung (250) vorzugsweise in einem Gehäuse der mobilen Bedienvorrichtung (110) integriert ist.

3. Verfahren (3) nach einem der vorhergehenden Ansprüche, wobei die Daten (181; 281) der zumindest einen optisch lesbaren Kennung (112; 272) und/oder die optisch lesbare Kennung (112; 272) mittels der Steuerungseinrichtung (140) oder der mobilen Bedienvorrichtung (210) dynamisch generiert werden.

4. Verfahren (3) nach einem der vorhergehenden Ansprüche, wobei in Verfahrensschritt a) mehrere optisch lesbare Kennungen (112; 272) in zeitlicher Abfolge angezeigt werden, und wobei das Freigeben (350) der Steuerung des Manipulators (160; 260) mittels der mobilen Bedienvorrichtung (110; 210) nur dann erfolgt, wenn die mehreren optisch lesbaren Kennungen (112; 272) von der optischen Lesevorrichtung (150; 250) korrekt erfasst wurden.

5. Verfahren (3) nach einem der vorhergehenden Ansprüche, wobei zumindest die Verfahrensschritte a) bis c) in definierten Zeitintervallen wiederholt werden, wobei die definierten Zeitintervalle bevorzugt kleiner 15 Minuten, noch bevorzugter kleiner 10 Minuten und am bevorzugtesten kleiner 5 Minuten sind.

## Claims

1. Method (3) for identifying a mobile operating apparatus (110; 210), in particular a wireless handheld device, for controlling at least one manipulator (160; 260) of a manipulator system (1; 2), wherein the manipulator system (1; 2) has a control device (140; 240) assigned to the manipulator (160; 260) and wherein the mobile operating apparatus (110; 210) preferably has a graphical user interface (GUI) (113; 213), comprising the following method steps:
a) displaying (330) at least one optically readable identifier (112; 272) on an electronic display apparatus (111; 270), wherein the electronic display apparatus (111; 270) is assigned to the control device (140; 240) or to the mobile operating apparatus (110; 210);
b) detecting (340) the optically readable identifier (112; 272) by means of an optical reading apparatus (150; 250), wherein the optical reading apparatus (150; 250) is assigned to the respective other control device (140; 240) or mobile operating apparatus (110; 210);
c) releasing (350) the control of the manipulator (160; 260) for controlling by means of the mobile operating apparatus (110; 210) when the optically readable identifier (112; 272) has been correctly detected by the optical reading apparatus (150; 250), **characterised in that**
the method further comprises the following method steps:
transmitting (320) data (181, 182) of at least one optically readable identifier (112; 272) from the control device (140) to the mobile operating apparatus (210) and displaying the optically readable identifier (112; 272) on the electronic display apparatus of the mobile operating apparatus (210); or:
transmitting (320) data (181, 182) of at least one optically readable identifier (112; 272) from the mobile operating apparatus (210) to the control device (140) and displaying the optically readable identifier (112; 272) on the electronic display apparatus of the control device (140).

2. Method (3) according to Claim 1, wherein
i) the optical reading apparatus (150) is assigned to the control device (140), and wherein the electronic display apparatus (111) is assigned to the mobile operating apparatus (110), wherein the electronic display apparatus (111) is preferably integrated in a housing of the mobile operating apparatus (110), or wherein
ii) the optical reading apparatus (250) is assigned to the mobile operating apparatus (210), and wherein the electronic display apparatus (270) is assigned to the control device (240), wherein the optical reading apparatus (250) is preferably integrated in a housing of the mobile operating apparatus (110).

3. Method (3) according to one of the preceding claims, wherein the data (181; 281) of the at least one optically readable identifier (112; 272) and/or the optically readable identifier (112; 272) are dynamically generated by means of the control device (140) or the mobile operating apparatus (210).

4. Method (3) according to one of the preceding claims, wherein in method step a) a plurality of optically readable identifiers (112; 272) are displayed in time sequence, and wherein the releasing (350) of the control of the manipulator (160; 260) by means of the mobile operating apparatus (110; 210) takes place only when the plurality of optically readable identifiers (112; 272) have been correctly detected by the optical reading apparatus (150; 250).

5. Method (3) according to one of the preceding claims, wherein at least the method steps a) to c) are repeated in defined time intervals, wherein the defined time intervals are preferably less than 15 minutes, more preferably less than 10 minutes and most preferably less than 5 minutes.

## Revendications

1. Procédé (3) d'identification d'un dispositif opératoire mobile (110 ; 210), en particulier d'un appareil portatif sans fil, pour la commande d'au moins un manipulateur (160 ; 260) d'un système de manipulateur (1 ; 2), le système de manipulateur (1 ; 2) comportant un équipement de commande (140 ; 240) associé au manipulateur (160 ; 260), et le dispositif opératoire mobile (110 ; 210) comportant de préférence une surface utilisateur graphique (GUI) (113 ; 213), incluant les étapes de procédé suivantes :
a) affichage (330) au moins d'une identification optiquement lisible (112 ; 272) sur un dispositif d'affichage électronique (111 ; 270), le dispositif d'affichage électronique (111 ; 270) étant associé à l'équipement de commande (140 ; 240) ou au dispositif opératoire mobile (110 ; 210) ;
b) détection (340) de l'identification optiquement lisible (112 ; 272) au moyen d'un dispositif de lecture optique (150 ; 250), le dispositif de lecture optique (150 ; 250) étant associé respectivement à l'autre équipement de commande (140 ; 240) ou dispositif opératoire mobile (110 ; 210) ;
c) libération (350) de la commande du manipulateur (160 ; 260) pour la commande au moyen du dispositif opératoire mobile (110 ; 210) lorsque l'identification optiquement lisible (112 ; 272) a été correctement détectée par le dispositif de lecture optique (150 ; 250), **caractérisé en ce que** le procédé comprend en outre les étapes de procédé suivantes :
transmission (320) de données (181, 182) au moins d'une identification optiquement lisible (112 ; 272) de l'équipement de commande (140) au dispositif opératoire mobile (210) et affichage de l'identification optiquement lisible (112 ; 272) sur le dispositif d'affichage électronique du dispositif opératoire mobile (210) ; ou
transmission (320) de données (181, 182) au moins d'une identification optiquement lisible (112 ; 272) du dispositif opératoire mobile (210) à l'équipement de commande (140) et affichage de l'identification optiquement lisible (112 ; 272) sur le dispositif d'affichage électronique de l'équipement de commande (140).

2. Procédé (3) selon la revendication 1,
i) le dispositif de lecture optique (150) étant associé à l'équipement de commande (140), le dispositif d'affichage électronique (111) étant associé au dispositif opératoire mobile (111), le dispositif d'affichage électronique (111) étant intégré de préférence dans un boîtier du dispositif opératoire mobile (110), ou
ii) le dispositif de lecture optique (250) étant associé au dispositif opératoire mobile (210), et le dispositif d'affichage électronique (270) étant associé à l'équipement de commande (240), le dispositif de lecture optique (250) étant intégré de préférence dans un boîtier du dispositif opératoire mobile (110).

3. Procédé (3) selon une des revendications précédentes, les données (181 ; 281) de la au moins une identification optiquement lisible (112 ; 272) et/ou l'identification optiquement lisible (112 ; 272) étant générées dynamiquement au moyen de l'équipement de commande (140) ou du dispositif opératoire mobile (210).

4. Procédé (3) selon une des revendications précédentes, dans l'étape de procédé a) plusieurs identifications optiquement lisibles (112 ; 272) étant affichées selon une succession chronologique, et la libération (350) de la commande du manipulateur (160 ; 260) au moyen du dispositif opératoire mobile (110 ; 210) n'intervenant que si les plusieurs identifications optiquement lisibles (112 ; 272) ont été correctement détectées par le dispositif de lecture optique (150 ; 250).

5. Procédé (3) selon une des revendications précédentes, au moins les étapes de procédé a) à c) étant répétées à des intervalles de temps définis, les intervalles de temps définis étant préférentiellement inférieurs à 15 minutes, encore plus préférentiellement inférieurs à 10 minutes et le plus préférentiellement inférieurs à 5 minutes.
